(19) Europäisches Patentamt
European Patent Office
Office européen des brevets

(11) **EP 1 015 748 B1**

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(21) Anmeldenummer: **98951253.8**

(22) Anmeldetag: **02.09.1998**

(51) Int Cl.[7]: **F02D 41/18**, F02D 41/14, F02M 21/08

(86) Internationale Anmeldenummer:
**PCT/DE98/02572**

(87) Internationale Veröffentlichungsnummer:
**WO 99/14476 (25.03.1999 Gazette 1999/12)**

(54) **VERFAHREN UND VORRICHTUNG ZUR BESTIMMUNG EINER GASFÜLLUNG EINES VERBRENNUNGSMOTORS**

METHOD AND DEVICE FOR DETERMINING THE GAS INTAKE IN AN INTERNAL COMBUSTION ENGINE

PROCEDE ET DISPOSITIF POUR DETERMINER LE DEGRE D'ADMISSION DE GAZ D'UN MOTEUR A COMBUSTION INTERNE

(84) Benannte Vertragsstaaten:
**DE FR GB**

(30) Priorität: **17.09.1997 DE 19740919**

(43) Veröffentlichungstag der Anmeldung:
**05.07.2000 Patentblatt 2000/27**

(73) Patentinhaber: **ROBERT BOSCH GMBH**
**70442 Stuttgart (DE)**

(72) Erfinder:
• **WILD, Ernst**
  **D-71739 Oberriexingen (DE)**
• **REUSCHENBACH, Lutz**
  **D-70469 Stuttgart (DE)**
• **BENNINGER, Nikolaus**
  **D-71665 Vaihingen (DE)**
• **KOERNER, Hendrik**
  **D-53340 Meckenheim (DE)**
• **HESS, Werner**
  **D-70499 Stuttgart (DE)**
• **ZHANG, Hong**
  **D-93057 Regensburg (DE)**
• **MALLEBREIN, Georg**
  **D-78224 Singen (DE)**
• **VON HOFMANN, Harald**
  **D-38165 Lehre (DE)**

(56) Entgegenhaltungen:
**EP-A- 0 752 523          WO-A-97/35106**
**US-A- 5 205 260          US-A- 5 273 019**

## Beschreibung

Stand der Technik

Die Erfindung betrifft ein Verfahren und eine Vorrichtung zur Bestimmung einer Gasfüllung eines Verbrennungsmotors. Die Erfindung ist einsetzbar insbesondere auf dem Gebiet der Fahrzeugtechnik, beispielsweise bei einem Verbrennungsmotor in einem Personenkraftwagen.

Übliche Verbrennungsmotoren weisen ein Saugrohr auf, in welchem sich ein Gasgemisch bestehend aus einem Frischgas und einem Abgas befindet. Während des Betriebs des Verbrennungsmotors wird dieses Gasgemisch in die Zylindervolumen des Verbrennungsmotors eingesaugt und anschließend verdichtet und verbrannt. Das Volumen des in den Zylinder einströmenden Gases, inbesondere der Frischgasanteil dieses Volumens, muss bestimmt werden, um dementsprechend die Menge des für die Verbrennung zur Verfügung zu stellenden Kraftstoffs zu bemessen.

Die DE 32 38 190 C2 beschreibt ein elektronisches System zum Steuern bzw. Regeln von Betriebskenngrößen einer Brennkraftmaschine. Dabei wird auf der Basis von Drehzahl und Luftdurchsatz im Ansaugrohr der Druck im Ansaugrohr bestimmt bzw. auf der Basis der Drehzahl und dem Druck wird der Luftdurchsatz bestimmt.

In der Patentanmeldung mit der Anmeldenummer 197 13 379.7 wird eine Einrichtung zum Bestimmen der in die Zylinder einer Brennkraftmaschine mit Lader gelangenden Luft beschrieben. Dieses System berücksichtigt auch die aufgrund der Ladungsvorgänge zusätzlich auftretenden physikalischen Gegebenheiten. Insbesondere werden die im Saugrohr einer Brennkraftmaschine mit Lader ablaufenden physikalischen Vorgänge durch Einbeziehung physikalischer und strömungstechnischer Zusammenhänge gut erfasst.

Die US 5 205 260 A offenbart eine Berechnung des Gasstroms in einem Zylinder einer Brennkraftmaschine eines Kraftfahrzeugs unter elektronischer Berechnung des Partialdruckes des Frischgases im Saugrohr und des Partialdruckes des rückgeführten Abgases.

Die EP 594 114 A beschreibt die Berechnung eines Massenstroms über einer Drosselklappe oder über andere Drosselstellen, beispielsweise in einer Abgasrückführleitung, unter Zuhilfenahme der Bernoulli-Gleichung.

Der Erfindung liegt das Problem zugrunde, den Frischgas-Anteil an dem befüllten Gasvolumen zu ermitteln. Darüber hinaus soll die Erfindung eine große Flexibilität hinsichtlich der verwendeten Eingangsgrößen aufweisen. Darüber hinaus soll das erfindungsgemäße Verfahren robust und zuverlässig ablaufen sowie die zugehörige Vorrichtung kostengünstig in der Herstellung, Betrieb und Wartung sein.

Das Problem wird durch die in den unabhängigen Patentansprüchen offenbarten Verfahren und Vorrichtungen gelöst. Besondere Ausführungsarten der Erfindung sind in den Unteransprüchen offenbart.

Eine Zusammenstellung der in der nachfolgenden Beschreibung und in den Patentansprüchen verwendeten Abkürzungen findet sich am Ende der Beschreibung.

Die vorstehend genannten Probleme werden durch ein Verfahren zur Bestimmung einer Gasfüllung eines Verbrennungsmotors, der ein Saugrohr aufweist, gelöst, wobei sich in dem Saugrohr ein Gasgemisch aus einem Frischgas und einem Abgas befindet, wobei aus dem Saugrohr ein Gasmassenstrom mp_ab abströmt und wobei in dem Saugrohr ein Saugrohr-Druck (ps) herrscht, gekennzeichnet durch die Schritte: Ermitteln eines Partialdrucks des Frischgas-Anteils ps_fg an dem Gasmassenstrom mp_ab durch Aufstellen einer Massenbilanz für einen Frischgas-Massenstrom mp_fg, und Ermitteln eines Partialdrucks des Abgas-Anteils ps_ag an dem Gasmassenstrom mp_ab durch Aufstellen einer Massenbilanz für einen Abgas-Massenstrom mp_ag. Unter dem Aufstellen der Massenbilanz ist hierbei insbesondere die zeitliche Ableitung der allgemeinen Gasgleichung

$$m \times R \times T = p \times V$$

zu verstehen. Damit ergibt sich für die Massenbilanz für den Frischgas-Anteil:

$$mp\_fg = mp\_fg\_zu\_ - mp\_fg\_ab = \frac{d}{dt}(m\_fg)$$

$$= \frac{d}{dt}\left(ps\_fg \times VS \times \frac{1}{R \times TS}\right)$$

Entsprechend gilt für die Massenbilanz für den Abgas-Anteil:

$$mp\_ag = mp\_ag\_zu - mp\_ag\_ab = \frac{d}{dt}(m\_ag)$$

$$= \frac{d}{dt}\left(ps\_ag \times VS \times \frac{1}{R \times TS}\right)$$

Diese getrennte Bilanzierung von Frischgas und Abgas bietet den Vorteil, dass das befüllte Frischgasvolumen exakt berechnet werden kann. Dadurch ist vorteilhaft eine exakte und zuverlässige Bestimmung der zuzuführenden Kraftstoffmenge möglich. Dies erlaubt einen umweltschonenden und energiesparenden Betrieb des Verbrennungsmotors. Dadurch werden die Betriebskosten des Verbrennungsmotors reduziert und die Lebenserwartung des Verbrennungsmotors erhöht. Weiterhin ist vorteilhaft, dass auch bei verschiedenen Konfigurationen des Verbrennungsmotors, beispielsweise mit oder ohne Abgasrückführung, mit oder ohne Aufladung, usw., eine genaue Bestimmung der zuzuführenden Brennstoffmenge ermöglicht wird.

In einer besonderen Ausführungsart der Erfindung berechnet das Verfahren den Saugrohr-Druck ps aus der Summe des Partialdrucks des Frischgas-Anteils ps_fg und des Partialdrucks des Abgas-Anteils ps_ag. Diese Berechnung erfolgt durch die Addition:

$$ps = ps\_fg + ps\_ag$$

Diese Berechnung des Saugrohrdrucks ps bietet den Vorteil, dass ein eventuell zusätzlich gemessener Wert für den Saugrohrdruck anhand des berechneten Wertes überprüft werden kann. Weiterhin ist von Vorteil, dass der Saugrohrdruck auf diese Weise ohne den zusätzlichen Aufwand eines Druck-Messwertaufnehmers bestimmt werden kann. Weiterhin ist von Vorteil, dass der Saugrohrdruck auf diese Weise auch bei einem Ausfall eines vorhandenen Druck-Messwertaufnehmers bestimmt werden kann.

Eine besondere Ausführungsart der Erfindung ermittelt den Saugrohr-Druck ps unter Verwendung eines entsprechenden Messwertaufnehmers. Als Messwertaufnehmer kommen dabei beliebige, handelsübliche Druck-Messwertaufnehmer in Frage, insbesondere Dehnungsmessstreifen, Membran-Drucksensoren oder resonante Drucksensoren. Der Druck kann direkt oder indirekt über ein Zwischenmedium bestimmt werden. Das vom Druck-Messwertaufnehmer gelieferte Signal kann durch entsprechende Beschaltung noch aufbereitet werden, beispielsweise kann eine Temperaturkompensation oder ein Offset-Ableich vorgesehen sein. Die Ermittlung des Saugrohr-Drucks ps unter Verwendung eines Messwertaufnehmers bietet den Vorteil, dass der Saugrohr-Druck ps damit sehr genau bestimmt werden kann. Weiterhin ist von Vorteil, dass der mittels der Partialdrücke berechnete Saugrohr-Druck mittels des gemessenen Saugrohr-Drucks überprüft und ggf. korrigiert und die Berechnung kalibriert werden kann.

Eine besondere Ausführungsart der Erfindung ermittelt aus dem Saugrohr-Druck den Gasmassenstrom mp_ab. Diese Ermittlung erfolgt unter Berücksichtigung der Drehzahl n des Verbrennungsmotors sowie einer ggf. vorhandenen Nockenwellenverstellung NWS des Verbrennungsmotors, woraus ein Korrekturwert p_iagr der internen Abgasrückführung berücksichtigt wird. Insbesondere ist es damit möglich, den aus dem Saugrohr abströmenden Gasmassenstrom mp_ab gemäß der Gleichung

$$mp\_ab = (ps - p\_iagr) \times K$$

zu bestimmen.

Bei dem Wert K handelt es sich dabei um eine Berechnungskonstante, in welche die Pumpengleichung eingeht und ggf. Pulsationseffekte eingehen, die empirisch ermittelt wurden. Diese Berechnung des Gasmassenstroms mp_ab hat den Vorteil, dass sie auch ohne die Bereitstellung eines gemessenen Saugrohrdruckes möglich ist, allein auf der Grundlage der berechneten Partialdrücke. Dies ermöglicht eine kostengünstige und zuverlässige Realisierung des erfindungsgemäßen Verfahrens.

Bei einer besonderen Ausführungsart der Erfindung wird der aus dem Saugrohr abströmende Frischgas-Anteil mp_fg_ab an dem Gasmassenstrom mp_ab unter Verwendung des Partialdrucks des Frischgas-Anteils ps_fg, des Partialdrucks des Abgas-Anteils ps_ag und des Gasmassenstroms mp_ab berechnet. Hierzu wird zunächst ein Anteilsfaktor c_agr eingeführt, der sich wie folgt berechnet:

$$c\_agr = \frac{ps\_ag}{ps\_ag + ps\_fg}$$

Zur Bestimmung des Frischgas-Anteils an diesem Massenstrom wird davon ausgegangen, dass die Aufteilung der Massenströme in den Zylinder (Frischgas und Abgas) analog zur Aufteilung der Partialdrücke erfolgt. Demnach berechnet sich der aus dem Saugrohr abströmende Frischgas-Massenstrom mp_fg_ab zu:

$$mp\_fg\_ab = (1 - c\_agr) \times mp\_ab$$

Entsprechend gilt für den aus dem Saugrohr abströmenden Abgas-Massenstrom mp_ag_ab:

$$mp\_ag\_ab = (1 - c\_agr) \times mp\_ab$$

Es ist vorteilhaft, dass durch diese einfache und zuverlässige Berechnung sowohl der Frischgas-Anteil als auch der Abgas-Anteil an dem aus dem Saugrohr abströmenden Gasmassenstrom bestimmt werden kann. Durch die getrennte Erfassung von Frischgas- und Abgas-Anteil ist es möglich, den Verbrennungsmotor umweltschonend und energiesparend jeweils in seinem optimalen Arbeitspunkt zu betreiben.

Bei einer besonderen Ausführungsart der Erfindung wird die relative Frischgas-Füllung rl des Verbrennungsmotors unter Verwendung des Frischgasanteils mp_fg_ab sowie permanenter MLTHZ und transienter nmot, ZYLZA Motordaten berechnet. Die Berechnung der relativen Frischgas-Füllung rl hat den Vorteil, dass die Kraftstoff-Zuführung immer aufgrund aktueller Motordaten erfolgen kann, beispielsweise aufgrund der momentan in Betrieb befindlichen Anzahl der aktiven Zylinder des Motors. Dadurch wird die Kraftstoff-Einsparwirkung und die Umweltverträglichkeit während des Betriebs des Verbrennungsmotors weiter erhöht sowie dessen Lebenserwartung und Leistungsvermögen weiter verbessert.

Bei einer besönderen Ausführungsart der Erfindung wird eine aus der Bernoulli-Gleichung abgeleitete Funktion für die Berechnung eines Gasmassenstroms über eine Drossel angewandt, wobei der Druck nach der Drossel jeweils dem Saugrohr-Druck ps entspricht. Dies hat den Vorteil, dass wahlweise einige der prinzipiell geeigneten Messgrößen verwendet werden können und die jeweils nicht verfügbaren Größen mittels dieser abgeleiteten Funktion berechnet werden können. Dies erlaubt eine große Flexibilität des erfindungsgemäßen Verfahrens sowohl bei der vorrichtungstechnischen Realisierung dieses Verfahrens als auch während des Betriebs eines solchen Verfahrens. Darüber hinaus wird durch diese Flexibilität der Konfiguration auch die Betriebssicherheit des erfindungsgemäßen Verfahrens erhöht.

Bei einer besonderen Ausführungsart der Erfindung werden auch Gasflüsse über einen Leerlaufsteller mp_lls, Gasflüsse über ein Tankentlüftungsventil mp_tev, Gasflüsse über ein Abgasrückführventil mp_agr und bei einem aufgeladenen Verbrennungsmotor auch der Ladedruck pld bei der Bestimmung der Gasfüllung des Verbrennungsmotors berücksichtigt. Dies hat den Vorteil, dass die Genauigkeit der ermittelten Frischgasfüllung des Verbrennungsmotors weiter erhöht wird und somit die vorstehend genannten Vorteile verstärkt auftreten.

Die Lehre der vorliegenden Erfindung umfasst auch eine Vorrichtung zur Bestimmung einer Gasfüllung eines Verbrennungsmotors, der ein Saugrohr aufweist, wobei die Vorrichtung Messwertaufnehmer und elektronische Rechenmittel aufweist, die durch Aufstellen einer Massenbilanz für einen Frischgas-Massenstrom mp_fg einen Partialdruck eines Frischgas-Anteils ps_fg im Saugrohr berechnet, die durch Aufstellen einer Massenbilanz für einen Abgas-Massenstrom mp_ab einen Partialdruck eines Abgas-Anteils ps_ab im Saugrohr berechnet, und die unter Verwendung des Partialdrucks des Frischgas-Anteils ps_fg und des Partialdrucks des Abgas-Anteils ps_ab eine Frischgas-Füllung rl des Verbrennungsmotors ermittelt. Die Erfindung umfasst insbesondere eine Vorrichtung, die ein Verfahren wie vorstehend beschrieben ausführt. Diese erfindungsgemäße Vorrichtung bietet alle Vorteile, die vorstehend bereits für das erfindungsgemäße Verfahren benannt wurden. Insbesondere bietet die Vorrichtung den Vorteil eines geringen Kraftstoffverbrauchs, eines umweltverträglichen Betriebes des Verbrennungsmotors sowie einer hohen Leistungsfähigkeit und einer langen Lebensdauer der Vorrichtung und des Verbrennungsmotors.

Die Lehre der Erfindung umfasst auch ein Kraftfahrzeug mit einer Vorrichtung wie vorstehend beschrieben bzw. ein Kraftfahrzeug mit einer Vorrichtung, die ein Verfahren wie vorstehend beschrieben ausführen kann. Die vorstehend für die erfindungsgemäße Vorrichtung benannten Vorteile gelten für das Kraftfahrzeug entsprechend.

Die Lehre der Erfindung umfasst auch einen Datenträger, der ein Steuerprogramm enthält zum Ausführen des vorstehend beschriebenen Verfahrens sowie einen Datenträger, der Parameter beinhaltet, die zum Ausführen eines solchen Verfahrens bzw. zum Steuern einer vorstehend beschriebenen Vorrichtung erforderlich oder vorteilhaft sind. Ein solcher Datenträger kann insbesondere in Form eines Speichermittels ausgeführt sein, wobei die Speicherung mechanisch, optisch, magnetisch, elektronisch oder auf sonstige Weise erfolgen kann. Insbesondere sind elektronische Speichermittel, wie beispielsweise ein ROM (Read Only Memory, Nur-Lese-Speicher), PROM, EPROM oder EEPROM einsetzbar, die in entsprechende Steuer-Vorrichtungen eingesetzt bzw. eingesteckt werden können.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Ein Weg zum Ausführen der beanspruchten Erfindung ist nachfolgend anhand der Zeichnungen im Einzelnen erläutert.

Figur 1    zeigt ein Übersichtsbild der Systemanordnung;

Figur 2    zeigt das Modell der Füllungserfassung;

Figur 3    zeigt die Frischgas-Massenströme ins Saugrohr bei einem Saugmotor.

Figur 4    zeigt die Frischgas-Massenströme im Saugrohr bei einem Turbomotor;

Figur 5    zeigt den Abgasmassenstrom ins Saugrohr;

Figur 6    zeigt die Berechnung der relativen Füllung.

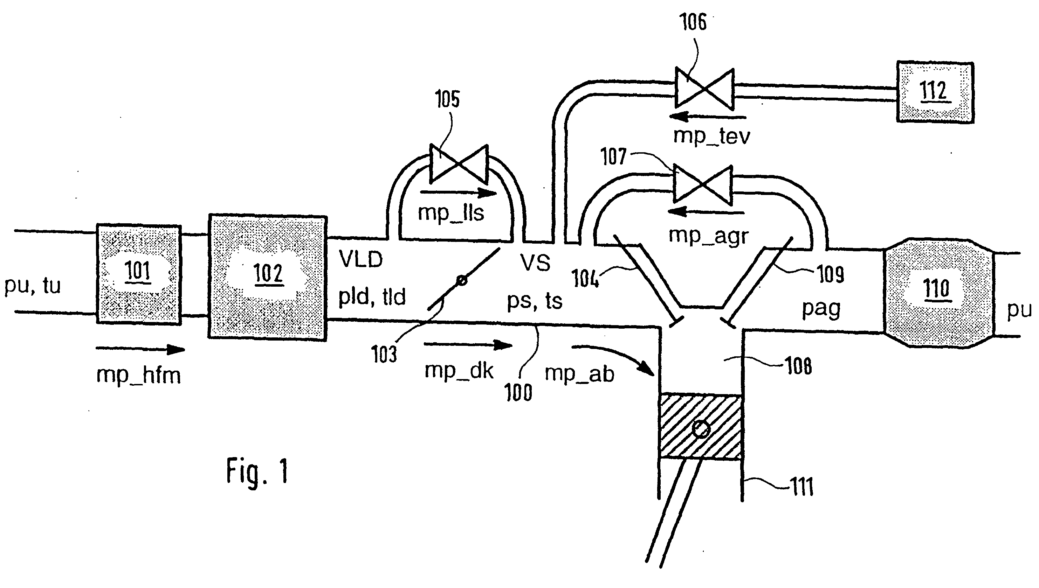

Die Figur 1 zeigt ein Übersichtsbild der Systemanordnung. Die Umgebungsluft tritt auf der Eingangsseite unter dem Druck pu und der Temperatur tu in das Saugrohr 100 ein. Ein Heißfilm-Luftmassensensor 101 bestimmt den Gasmassenstrom mp_hfm an dieser Stelle des Saugrohrs. Nach dem Heißfilm-Luftmassensensor (HFM) folgt ein Turbolader 102. Zwischen dem Turbolader 102 und der Drosselklappe 103 weist das Saugrohr 100 ein Volumen VLD auf. In diesem Volumen herrscht ein Druck pld sowie eine Temperatur tld. Zwischen der Drosselklappe 103 und dem Einlassventil 104 beträgt das Volumen des Saugrohrs VS. An dieser Stelle herrscht ein Druck ps sowie eine Temperatur ts. Die in dem Bereich des Saugrohrs zwischen der Drosselklappe 103 und dem Einlassventil 104 einströmende Gasmenge setzt sich zusammen aus dem Gasstrom mp_dk des Gasflusses über die Drosselklappe 103, einem Gasstrom mp_lls eines Leerlaufstellers 105, dem Gasfluss mp_tev eines Tankentlüftungsventils 106 sowie dem Gasstrom mp_agr eines Abgasrückführungsventils 107. Aus diesem Bereich des Saugrohrs strömt das Gas bei Öffnung des Einlassventils 104 in den Verbrennungsraum 108 des Zylinders 111. Auf der Auslassseite befindet sich zwischen einem Auslassventil 109 und einem Abgaskatalysator 110 ein Bereich, in dem das Abgasrückführventil 107 angeschlossen ist und in dem ein Druck pag herrscht. Nach dem Katalysator 110 herrscht wiederum der Umgebungsdruck pu. Das Tankentlüftungsventil 106 besitzt eine Verbindung zum Kraftstoffbehälter 112.

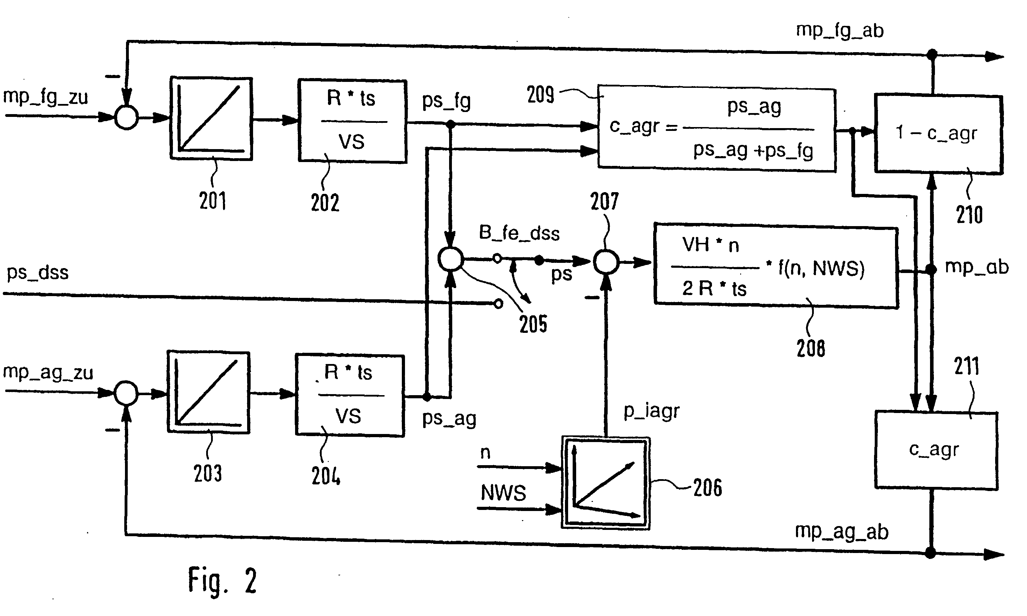

Die Figur 2 zeigt das Modell der Füllungserfassung. Der zuströmende Frischgas-Massenstrom mp_fg_zu wird über der Zeit integriert 201 und anschließend multipliziert 202 entsprechend der Gasgleichung, so dass der Frischgas-Partialdruck ps_fg berechnet wird. Entsprechend wird der zuströmende Abgas-Massenstrom mp_ag_zu integriert 203 und entsprechend der Gasgleichung multipliziert 204, so dass der Abgas-Partialdruck ps_ab berechnet wird. Aus den beiden Partialdrücken für das Frischgas ps_fg und das Abgas ps_ag wird in der dargestellten Stellung des Schalters B_fe_dss wird der Druck im Saugrohr ps durch Addition 205 berechnet. Parallel dazu wird aus der Drehzahl n und der Nockenwellenverstellung NWS ein Korrekturwert p_iagr berechnet 206. Dieser Korrekturwert berücksichtigt die systeminhärente Abgasrückführung aufgrund der Ventilstellungen während des Arbeitszyklus des Verbrennungsmotors. Der so ermittelte Korrekturwert p_iagr wird von dem Saugrohr-Druck ps subtrahiert 207. Der hieraus resultierende effektive Saugrohrdruck wird anschließend mit einem Faktor multipliziert 208, wobei sich dieser Faktor aus der Pumpengleichung und einer empirisch gewonnenen Funktion zusammensetzt, welche die Pulsationseffekte in Abhängigkeit der Drehzahl n und der Nockenwellenverstellung MWS zusammensetzt. Die Pumpengleichung berücksichtigt das Hubvolumen VH, die Drehzahl n, die Gaskonstante R und die Temperatur im Saugrohr ts. Als Ergebnis dieser Multiplikation 208 erhält man den Gesamtmassenstrom mp_ab in dem Zylinder. Parallel dazu wird aus dem Partialdruck des Frischgases ps_fg und dem Partialdruck des Abgases ps_ag ein Anteilfaktor c_agr berechnet 209. Unter Verwendung dieses Anteilsfaktors c_agr wird aus dem abströmenden Gasmassenstrom mp_ab der abströmende Frischgas-Massenstrom mp_fg_ab berechnet 210 und der abströmende Abgas-Massenstrom mp_ag_ab 211 berechnet.

Für den Fall, dass der Saugrohrdruck ps messtechnisch zur Verfügung steht, kann über die Bedingung B_fe_dss und den zugehörigen Schaltern anstelle des aus den Partialdrücken ps_fg und ps_ag berechneten Saugrohrdrucks der gemessene Saugrohrdruck ps_dss verwendet werden. Da in diesem Fall die stationäre Stabilität des Integrators aufgrund der unterbrochenen Rückkoppelungen nicht automatisch gewährleistet ist, wird eine Ergänzung notwendig, wobei durch einen Vergleich des gerechneten Saugrohrdrucks mit dem gemessenen Saugrohrdruck eine sich ergebende Differenz als ein Fehler interpretiert wird und dieser über einen Integral-Regler auf den Rückkopplungszweig des abströmenden Frischgas-Massenstroms mp_fg_ab eingerechnet wird.

Die Vorgehensweise bei der Berechnung der für die obige Funktion benötigten Eingangsgrößen, nämlich des Frischgas-Massenstroms ins Saugrohr mp_fg_zu sowie des Abgasmassenstroms ins Saugrohr mp_ag_zu basiert auf der aus der Literatur bekannten Drosselfunktion, die aus der Bernoulli-Gleichung für kompressible Medien abgeleitet ist. Gsmäß dieser Drosselfunktion gilt:

$$mp = f(A) \quad x \sqrt{\left( \frac{TV\_NORM}{tv} x \frac{pv}{PV\_NORM} x \ psi\_n \ (pn/pv)\right)}$$

$$mp = mp\_max \quad x \quad ft \quad x \quad fp \quad x \ psi\_n$$

Diese Drosselfunktion bedeutet, dass sich der Luftmassenstrom mp über die Drosselstelle berechnet aus einer freien Querschnittsfläche f(A) multipliziert mit einem Faktor ft für die Temperaturkompensation multipliziert mit einem Faktor fp für die Druckkompensation und multipliziert mit einer normierten Durchflussfunktion psi\_n, welche den Einfluss einer über- und unterkritischen Strömungsgeschwindigkeit berücksichtigt. Der Druck pn nach der Drosselstelle ist dabei jeweils gleich dem Saugrohrdruck ps.

Auf der Frischgasseite muss zwischen Saugmotoren und aufgeladenen Motoren, sogenannten Turbomotoren, unterschieden werden. Gemeinsam ist dabei, dass für jedes Drosselorgan über eine Kennlinie ein Gasstrom ermittelt wird, der unter Normbedingungen in Bezug auf Druck und Temperatur vor der Drossel über die betrachtete Drossel fliesst.

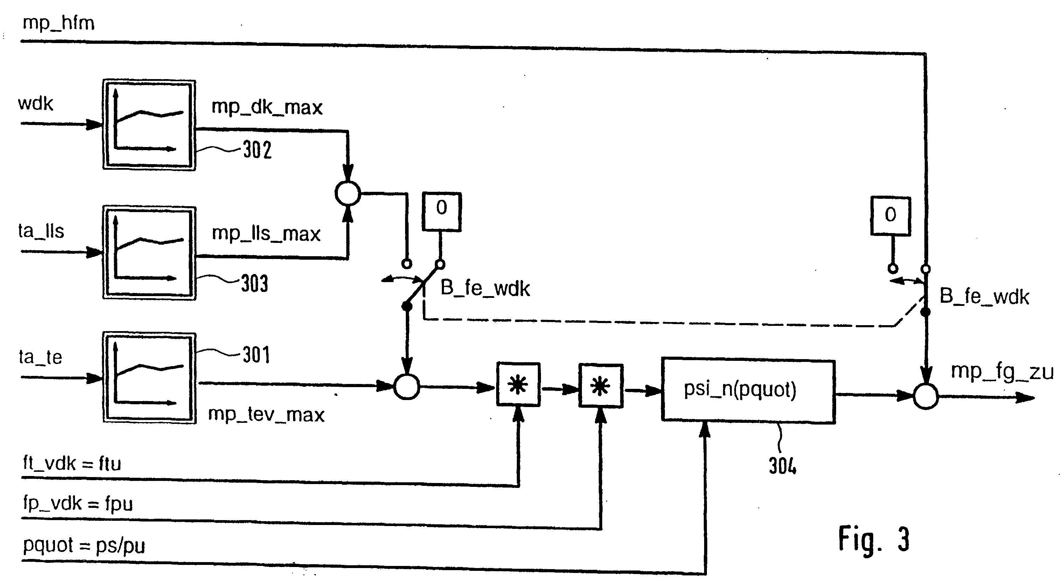

Die Figur 3 zeigt die Frischgas-Massenströme ins Saugrohr bei einem Saugmotor. Zunächst besteht die Möglichkeit, wie in der Figur 3 gemäß der Schalterstellung B\_fe\_wdk auch dargestellt, dass der zuströmende Frischgas-Massenstrom mp\_fg\_zu direkt mittels eines Heißfilm-Luftmassensensors HFM gemessen wird mp\_hfm. Einen Einfluss hat in der dargestellten Schalterstellung dann lediglich noch die Tankentlüftung ta\_te, wobei dieser Einfluss über eine Drosselfunktion 301 in einen Gasmassenfluss mp\_tev\_max umgerechnet wird, und anschließend mit den Gewichtungsfaktoren der Umgebungstemperatur ftu, dem Umgebungsdruck fpu und der normierten Durchflussfunktion psi\_n 304 gewichtet wird. Wird der Schalter B\_fe\_wdk umgelegt, berechnet sich der zuströmende Frischgas-Massenstrom mp\_fg\_zu wie folgt: Die Drosselklappen-Stellung wdk wird über eine Drosselfunktion 302 in einen maximalen Fluss über die Drosselklappe mp\_dk\_max umgerechnet; ebenso wird der Fluss über einen ggf. vorhandenen Leerlaufsteller über eine Drosselfunktion 303 in einen maximalen Gasfluss über den Leerlaufsteller mp\_lls\_max umgerechnet. Die beiden maximalen Gasflüsse werden addiert und anschließend zu dem maximalen Gasfluss über das Tankentlüftungsventil mp\_tev\_max addiert. Anschließend wird der derart aufsummierte Gasmassenstrom mit den Gewichtungsfaktoren der Temperatur ftu, des Drucks fpu und der normierten Druchflussfunktion psi\_n gewichtet. Am Ende dieser Berechnungen resultiert ein zuströmender Frischgas-Massenstrom mp\_fg\_zu.

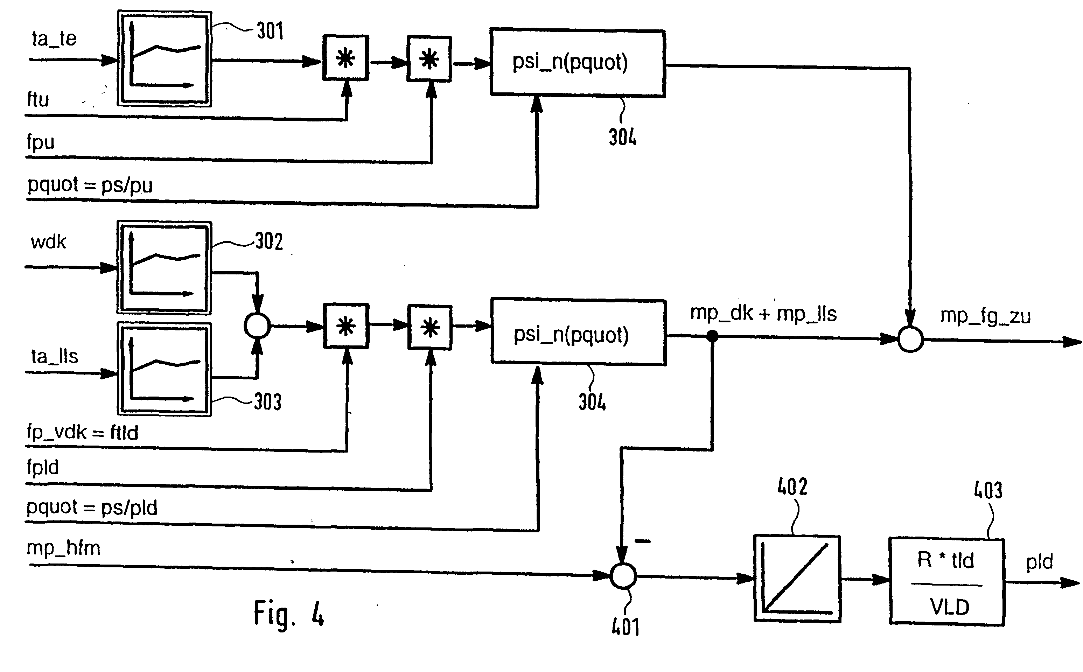

Die Figur 4 zeigt die Frischgas-Massenströme ins Saugrohr bei einem Turbomotor. Im Unterschied zur Figur 3 kommt hierbei als zusätzliches dynamisches System das Volumen zwischen dem Lader und der Drosselklappe mit der Zustandsgröße Ladedruck pld hinzu. Für dieses Volumen kann ebenfalls über eine Bilanzgleichung eine Differentialgleichung für den Druck im Volumen, hier den Ladedruck, hergeleitet werden. Die Drosselfunktion kann ebenfalls wieder angewendet werden, nun allerdings unter Berücksichtigung der veränderten Situation in Bezug auf den Druck vor der Drosselklappe, für den der Ladedruck anstelle des Umgebungsdruckes anzusetzen ist. Als weiter signifikanter Unterschied fällt auf, dass mit der Konfiguration nach Figur 4 aus dem errechneten Gasmassenstrom mp\_dk + mp\_lls und dem Signal des Heißfilm-Luftmassensensors mp\_hfm durch entsprechende Differenzbildung 401 und nachgeschaltete Integration über der Zeit 402 und Gewichtung entsprechend der Gasgleichung 403 der Ladedruck pld ermittelt werden kann. Als wesentliches Ergebnis steht allerdings auch bei der in der Figur 4 dargestellten Konfiguration am Ausgang der zuströmende Frischgas-Massenstrom mp\_fg\_zu als Ausgangssignal zur weiteren Verarbeitung zur Verfügung.

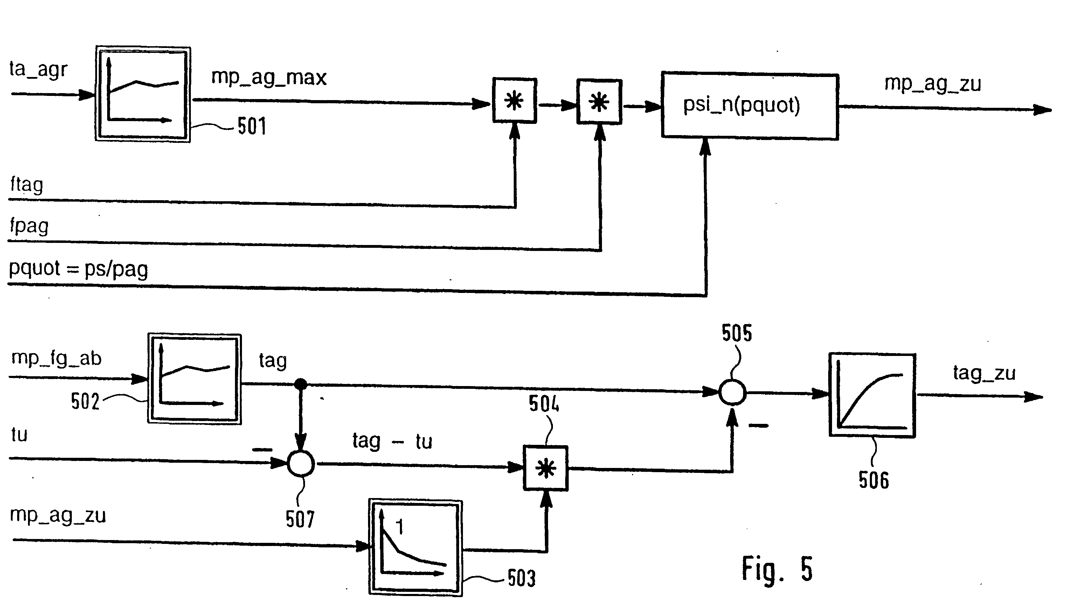

Die Figur 5 zeigt den Abgas-Massenstrom in das Saugrohr. Der Abgasmassenstrom mp\_ag\_zu wird aus dem Signal des Abgas-Rückstromventils ta\_agr über eine Drosselfunktion 501 in einen maximalen Massenstrom über das Abgasventil mp\_ag\_max umgewandelt und anschließend mit den entsprechenden Gewichtungsfaktoren für die Temperatur ftag, den Druck fpag und die normierte Strömungsfunktion psi\_n gewichtet. Für die Bestimmung der Temperatur des zuströmenden Abgases tag\_zu dient ein einfaches Modell, welches den Wärmeübergang an der Wand des Verbindungsrohres zum Saugrohr berücksichtigt. Zunächst wird die Temperatur tag des Abgases mittels dem abströmenden Frischgas-Massenstrom mp\_fg\_ab über die Drosselfunktion 502 ermittelt. Eine anschließende Differenzbildung 507 unter Verwendung der Umgebungstemperatur tu führt zu einem Differenzwert tag - tu. Dieser Differenzwert wird mit dem mit der Funktion 503 bewerteten zuströmenden Abgas-Massenstrom mp\_ag\_zu gewichtet 503 und anschließend von der Temperatur des Abgases tag subtrahiert 504. Der sich daraufhin einstellende Wert wird abschließend mit einer Funktion 506 bewertet und es resultiert eine Temperatur des zuströmenden Abgases tag\_zu.

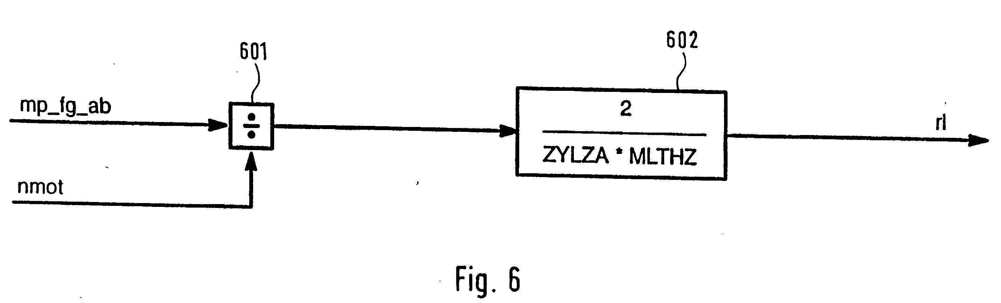

Die Figur 6 zeigt die Berechnung der relativen Gasfüllung rl aus dem abströmenden Frischgas-Massenstrom mp\_fg\_ab. Der abströmende Frischgas-Massenstrom mp\_fg\_ab wird durch die Motorendrehzahl nmot dividiert 601 und anschließend mit einem Faktor multipliziert 602, wobei der Faktor die Luftmasse MLTHZ in einem Zylinder unter Normbedingungen (T = 273 Grad Kelvin, p = 1013 mbar) sowie die Anzahl der aktiven Zylinder ZYLZA des Motors berücksichtigt. Aus dieser Berechnung resultiert die relative Füllung rl eines Zylinders mit einer Frischgasmasse.

**Abkürzungen**

B_fe_wdk      Schalter, Schaltsignal

c_agr      Anteilsfaktor Frischgas/Abgas

f(A)      freie Querschnittsfläche einer Drosselstelle
fp      Faktor Druckkompensation
fpag      Gewichtungsfaktor Abgas-Druck
fpu      Gewichtungsfaktor Umgebungsdruck
fpld      Gewichtungsfaktor Lader-Druck
ft      Faktor Temperaturkompensation
ftag      Gewichtungsfaktor Abgas-Temperatur
ftu      Gewichtungsfaktor Umgebungstemperatur
ftld      Gewichtungsfaktor Lader-Temperatur

K      Berechnungskonstante

m      (Mol-) Masse des Gases
m_ag      Masse Abgas
m_fg      Masse Frischgas
mp      Luftmassenstrom über eine Drosselstelle
mp_ab      aus dem Saugrohr abströmender Gasmassenstrom
mp_ag      Abgas-Massenstrom
mp_ag_ab      abströmender Abgas-Massenstrom
mp_ag_max      maximal-zuströmender Abgas-Massenstrom
mp_ag_zu      zuströmender Abgas-Massenstrom
mp_agr      Gasfluß über ein Abgas-Rückführventil
mp_dk_max      maximaler Fluß über die Drosselklappe
mp_fg      Frischgas-Massenstrom
mp_fg_ab      abströmender Frischgas-Massenstrom
mp_fg_zu      zuströmender Frischgas-Massenstrom
mp_hfm      Luftmassenstrom, vom Heissfilm-Sensor gemessen
mp_lls      Gasfluß über einen Leerlaufsteller
mp_lls_max      maximaler Gasfluß über einen Leerlaufsteller
mp_max      maximaler Luftmassenstrom über eine Drosselstelle
mp_tev      Gasfluß über ein Tank-Entlüftungsventil
mp_tev_max      maximaler Gasfluß über ein Tank-Entlüftungsventil

MLTHZ      Luftmasse in einem Zylinder bei Normbedingungen

n, nmot      Drehzahl
NWS      Nockenwellenverstellung

p      Druck
p_iagr      Korrekturwert der internen Abgasrückführung
pld      Ladedruck
pn      Druck nach der Drosselstelle
ps      Druck im Saugrohr
ps_ab      Partialdruck-Abgas
ps_fg      Partialdruck-Frischgas
psi_n      normierte Durchflußfunkton (0 < psi_n < 1)
pv      Druck vor der Drosselstelle

PV_NORM    Bezugsgröße

rl    relative Füllung

R    Gaskonstante

tld        Temperatur Lader

T        Temperatur

TS, ts        Temperatur Saugrohr

tv        Temperatur vor der Drosselklappe

TV_NORM    Bezugsgröße

V        Volumen

VH        Hub-Volumen

VLD        Volumen Lader

VS        Volumen Saugrohr

wdk    Drosselklappen-Stellung

ZYLZA        Anzahl der aktiven Zylinder

**Patentansprüche**

1.  Verfahren zur Bestimmung einer Gasfüllung eines Verbrennungsmotors, der ein Saugrohr aufweist, wobei sich in dem Saugrohr ein Gasgemisch aus einem Frischgas (fg) und einem Abgas (ag) befindet, wobei aus dem Saugrohr ein Gasmassenstrom (mp_ab) abströmt und wobei in dem Saugrohr ein Saugrohr-Druck (ps) herrscht, mit den folgenden Schritten:

    -  Ermitteln eines Partialdrucks des Frischgas-Anteils (ps_fg) an dem Gasmassenstrom (mp_ab) durch Aufstellen einer Massenbilanz für einen Frischgas-Massenstrom und
    -  Ermitteln eines Partialdrucks des Abgas-Anteils (ps_ag) an dem Gasmassenstrom (mp_ab) durch Aufstellen einer Massenbilanz für einen Abgas-Massenstrom, **gekennzeichnet durch** die Verwendung einer aus der BERNOULLI-Gleichung abgeleiteten Funktion für die Berechnung eines Gasmassenstroms über eine Drossel mit einem Faktor (ft) für die Temperaturkompensation, einem Faktor (fp) für die Druckkompensation und einem von dem Verhältnis des Drucks (pn) nach der Drossel zu dem Druck (pv) vor der Drossel abhängigen Faktor, wobei der Druck nach der Drossel dem Saugrohr-Druck (ps) entspricht.

2.  Verfahren nach Anspruch 1, **gekennzeichnet durch** die Verwendung des Verhältnisses des Saugrohr-Drucks (ps) zu dem Umgebungsdruck (pn) bei der Berechnung des über eine Drosselklappe (103) zufließenden Frischgas-Anteils (mp_fg_zu).

3.  Verfahren nach Anspruch 1 oder 2, **gekennzeichnet durch** die Verwendung des Verhältnisses des Saugrohr-Drucks (ps) zu dem Abgas-Druck (pag) bei der Berechnung des über ein Abgasrückführventil (107) zufließenden Abgas-Anteils (mp_ag_zu).

4.  Verfahren nach einem der vorstehenden Ansprüche, **gekennzeichnet durch** Berücksichtigen von Gasflüssen über ein Tank-Entlüftungsventil (mp_tev) bei der Bestimmung der Gasfüllung des Verbrennungsmotors.

5.  Verfahren nach einem der vorstehenden Ansprüche, **gekennzeichnet durch** Berücksichtigen eines Ladedrucks (pld) bei der Bestimmung der Gasfüllung eines aufgeladenen Verbrennungsmotors.

6.  Vorrichtung zur Bestimmung einer Gasfüllung eines Verbrennungsmotors, der ein Saugrohr aufweist, wobei die Vorrichtung Messwertaufnehmer und elektronische Rechenmittel aufweist, wobei die Vorrichtung durch Aufstellen einer Massenbilanz für einen Frischgas-Massenstrom einen Partialdruck eines Frischgas-Anteils (ps_fg) im Saugrohr berechnet sowie durch Aufstellen einer Massenbilanz für ein Abgas-Massenstrom einen Partialdruck eines Abgas-Anteils (ps_ab) im Saugrohr berechnet, **gekennzeichnet durch** die Verwendung einer aus der BERNOULLI-Gleichung abgeleiteten Funktion für die Berechnung eines Gasmassenstroms über eine Drossel mit einem Faktor (ft) für die Temperaturkompensation, einem Faktor (fp) für die Druckkompensation und einem von dem Verhältnis des Drucks (pn) nach der Drossel zu dem Druck (pv) vor der Drossel abhängigen Faktor, wobei der Druck nach der Drossel dem Saugrohr-Druck (ps) entspricht.

**7.** Vorrichtung nach Anspruch 6, **dadurch gekennzeichnet, dass** die Vorrichtung ein Verfahren nach einem der Ansprüche 1 bis 5 ausführt.

**8.** Kraftfahrzeug, **gekennzeichnet durch** die Vorrichtung nach einem der Ansprüche 6 oder 7.

**Claims**

**1.** Method for determining the gas intake in an internal-combustion engine which has an induction pipe, a gas mixture of a fresh gas (fg) and an exhaust gas (ag) being situated in the induction pipe, a gas mass flow (mp_ab) flowing out of the induction pipe and an induction-pipe pressure (ps) prevailing in the induction pipe, comprising the following steps:

- determining a partial pressure of the fresh-gas fraction (ps_fg) of the gas mass flow (mp_ab) by establishing a mass balance for a fresh-gas mass flow, and
- determining a partial pressure of the exhaust-gas fraction (ps_ag) of the gas mass flow (mp_ab) by establishing a mass balance for an exhaust-gas mass flow, **characterized by** the use of a function which is derived from the Bernoulli equation for calculating a gas mass flow via a throttle, with a factor (ft) for temperature compensation, a factor (fp) for pressure compensation and a factor which is dependent on the ratio of the pressure (pn) downstream of the throttle to the pressure (pv) upstream of the throttle, the pressure downstream of the throttle corresponding to the induction-pipe pressure (ps).

**2.** Method according to Claim 1, **characterized by** the use of the ratio of the induction-pipe pressure (ps) to the ambient pressure (pn) during the calculation of the fresh-gas fraction (mp_fg_zu) flowing in via a throttle valve (103).

**3.** Method according to Claim 1 or 2, **characterized by** the use of the ratio of the induction-pipe pressure (ps) to the exhaust-gas pressure (pag) during the calculation of the exhaust-gas fraction (mp_ag_zu) flowing in via an exhaust-gas recycling valve (107).

**4.** Method according to one of the preceding claims, **characterized by** taking account of gas flows via a tank-venting valve (mp_tev) when determining the gas intake of the internal-combustion engine.

**5.** Method according to one of the preceding claims, **characterized by** taking account of a boost pressure (pld) when determining the gas intake of a supercharged internal-combustion engine.

**6.** Device for determining the gas intake of an internal-combustion engine which has an induction pipe, the device having measured-value sensors and electronic calculation means, the device, by establishing a mass balance for a fresh-gas mass flow, calculating a partial pressure of a fresh-gas fraction (ps_fg) in the induction pipe and, by establishing a mass balance for an exhaust-gas mass flow, calculating a partial pressure of an exhaust-gas fraction (ps_ab) in the induction pipe, **characterized by** the use of a function which is derived from the Bernoulli equation for the calculation of a gas mass flow via a throttle, with a factor (ft) for temperature compensation, a factor (fp) for pressure compensation and a factor which is dependent on the ratio of the pressure (pn) downstream of the throttle to the pressure (pv) upstream of the throttle, the pressure downstream of the throttle corresponding to the induction-pipe pressure (ps).

**7.** Device according to Claim 6, **characterized in that** the device carries out a method according to one of Claims 1 to 5.

**8.** Motor vehicle, **characterized by** the device according to one of Claims 6 and 7.

**Revendications**

**1.** Procédé pour déterminer le remplissage de gaz d'un moteur à combustion interne comportant une tubulure d'admission dans laquelle se trouve un mélange de gaz frais (fg) et de gaz d'échappement (ag), un débit massique de gaz (mp_ab) sortant de la tubulure d'admission dans laquelle règne une pression de tubulure d'admission (ps), comprenant les étapes suivantes :

- on détermine la pression partielle de la composante de gaz frais (ps_fg) de la veine massique de gaz (mp_ab) en établissant un bilan massique pour un débit massique de gaz frais, et
- on détermine la pression partielle de la composante de gaz d'échappement (ps_ag) dans le débit massique de gaz (mp_ab) en établissant un bilan massique pour le débit massique de gaz d'échappement,

**caractérisé en ce qu'**
on utilise une fonction dérivée de l'équation de Bernoulli pour calculer un débit massique de gaz passant dans un organe d'étranglement avec un coefficient (ft) pour la compensation de température, un coefficient (fp) pour la compensation de pression et un coefficient dépendant du rapport de la pression (pn) en aval de l'organe d'étranglement et de la pression (pv) en amont de l'organe d'étranglement, la pression en aval de l'organe d'étranglement correspondant à la pression dans la tubulure d'admission (ps).

2. Procédé pour déterminer le remplissage de gaz d'un moteur à combustion interne selon la revendication 1,
   **caractérisé en ce qu'**
   on applique le rapport de la pression dans la tubulure d'admission (ps) à la pression ambiante (pn) pour le calcul de la composante de gaz frais de retour (mp_fg_zu) passant sur le volet d'étranglement (103).

3. Procédé pour déterminer le remplissage de gaz d'un moteur à combustion interne selon la revendication 2,
   **caractérisé en ce qu'**
   on applique le rapport de la pression (ps) dans la tubulure d'admission à la pression des gaz d'échappement (pag) pour calculer la composante de gaz d'échappement (mp_ag_zu) qui revient par la soupape de réinjection de gaz d'échappement (107).

4. Procédé pour déterminer le remplissage de gaz d'un moteur à combustion interne selon l'une des revendications précédentes,
   **caractérisé en ce qu'**
   on tient compte des flux de gaz à travers la soupape de ventilation de réservoir (mp_tev) pour déterminer le remplissage de gaz du moteur à combustion interne.

5. Procédé pour déterminer le remplissage de gaz d'un moteur à combustion interne selon l'une des revendications précédentes,
   **caractérisé en ce que**
   l'on tient compte de la pression de suralimentation (pld) pour déterminer le remplissage de gaz d'un moteur à combustion interne à turbocompresseur.

6. Dispositif pour déterminer le remplissage de gaz d'un moteur à combustion interne comportant une tubulure d'admission, le dispositif comprenant un capteur de valeur de mesure et un moyen de calcul électronique, qui calcule en établissant un bilan massique pour le débit massique d'air frais, une pression partielle de la composante de gaz frais (ps_fg) dans la tubulure d'admission, ainsi qu'en établissant un bilan massique pour le débit massique de gaz d'échappement on calcule la pression partielle de la composante de gaz d'échappement (ps_ab) dans la tubulure d'admission,
   **caractérisé en ce qu'**
   il applique une fonction dérivée de l'équation de Bernoulli pour calculer le débit massique de gaz sur l'organe d'étranglement avec un coefficient (ft) pour la compensation de température, un coefficient (fp) pour la compensation de pression et un coefficient dépendant du rapport de la pression (pn) en aval de l'organe d'étranglement à la pression (pv) en amont de cet organe, la pression en aval de l'organe d'étranglement correspondant à la pression (ps) dans la tubulure d'aspiration.

7. Dispositif pour déterminer le remplissage de gaz d'un moteur à combustion interne comportant une tubulure d'admission selon la revendication 6,
   **caractérisé en ce qu'**
   il met en oeuvre un procédé selon l'une des revendications 1 à 5.

8. Véhicule **caractérisé en ce qu'**il est équipé d'un dispositif selon l'une des revendications 6 ou 7.

Fig. 1

EP 1 015 748 B1

Fig. 2

EP 1 015 748 B1

Fig. 3

EP 1 015 748 B1

Fig. 4

ta_te

301

psi_n(pquot)

304

ftu

fpu

pquot = ps/pu

wdk

302

ta_lls

303

psi_n(pquot)

304

fp_vdk = ftld

fpld

pquot = ps/pld

mp_hfm

mp_dk + mp_lls

mp_fg_zu

402

403

401

R * tld / VLD

pld

EP 1 015 748 B1

14

Fig. 5

ta_agr → [501] → mp_ag_max → [*] → [*] → psi_n(pquot) → mp_ag_zu

ftag

fpag

pquot = ps/pag

mp_fg_ab → [502] → tag

tu

mp_ag_zu → [503] 1

tag − tu → [504] [*] → [505] − → [506] → tag_zu

507

EP 1 015 748 B1

mp_fg_ab

nmot

601

602

$$\frac{2}{ZYLZA * MLTHZ}$$

rl

Fig. 6

16